# DEMANDE DE BREVET EUROPEEN

(11) **EP 3 502 479 A1**
(43) Date de publication de la demande: **26.06.2019**
(21) Numéro de dépôt: 18213533.5
(22) Date de dépôt: 18.12.2018
(51) Int. Cl.: F04D 13/06, F04D 29/58, H02K 9/19

(54) **MOTEUR ÉLECTRIQUE REMPLI D'HUILE**

(30) Priorité: 21.12.2017 FR 1771405
(71) Demandeur: KSB S.A.S, 92230 Gennevilliers (FR)
(72) Inventeur: PETIT, Nicolas, 59190 Hazebrouck (FR); WATTEBLED, Anthony, 59551 Attiches (FR); BRISSON, Alexandre, 59211 Santes (FR)
(74) Mandataire: Eidelsberg, Olivier Nathan

(57) **Abrégé**

L'invention concerne un moteur électrique, ayant une carcasse entourant de manière étanche à l'huile un stator et un rotor et contenant de l'huile isolante du point de vue électrique et bonne conductrice de la chaleur, caractérisé en ce que de l'huile est emprisonnée dans sensiblement tout l'espace laissé libre par le stator et le rotor dans la carcasse.

## Description

La présente invention se rapporte aux moteurs électriques et s'applique notamment aux groupes motopompes, comprenant un impulseur solidaire en rotation de l'arbre de sortie d'un moteur électrique. Le moteur a une carcasse entourant de manière étanche un stator et un rotor tournant.

Lorsque le moteur chauffe, par exemple lorsque le groupe motopompe n'est plus immergé, la pompe s'arrête.

L'invention pallie cet inconvénient par un moteur, qui peut fonctionner plus longtemps et dont, d'une manière surprenante, le rendement électrique est amélioré.

L'invention a pour objet un moteur électrique, ayant une carcasse entourant de manière étanche à l'huile un stator et un rotor et contenant de l'huile isolante du point de vue électrique et bonne conductrice de la chaleur, caractérisé en ce que de l'huile est emprisonnée dans sensiblement tout l'espace laissé libre par le stator et le rotor dans la carcasse.

L'invention vise aussi un procédé pour retarder l'échauffement du moteur et/ou pour en augmenter le rendement électrique, caractérisé en ce que l'on emprisonne de l'huile dans sensiblement tout l'espace laissé libre dans la carcasse par le rotor et le stator.

On remplit de préférence de 60% à 100% et notamment de 90% à 100% ou 99% le volume de l'espace inoccupé par le stator et le rotor dans la carcasse. L'huile occupe l'entrefer entre le stator et le rotor.

L'huile est emprisonnée. Elle n'est pas envoyée à l'extérieur du moteur par un système de recirculation. Le moteur est simple à utiliser, puisqu'un contrôle de niveau d'huile n'est pas nécessaire.

Comme l'huile conduit bien la chaleur, le moteur s'échauffe moins vite et peut fonctionner plus longtemps même s'il n'est pas immergé mais, contre toute attente, et en dépit des effets escomptés de frottement des pièces mobiles du moteur dans l'huile, le rendement électrique du moteur est amélioré. On entend par rendement du moteur la puissance disponible sur l'arbre rapportée à la puissance électrique consommée.

La conductibilité thermique de l'huile à 25°C peut être notamment supérieure ou égale à 0,12 W/m.K et sa rigidité diélectrique supérieure ou égale à 27 kV.

De préférence, on utilise une huile biodégradable. On se prémunit ainsi d'une fuite éventuelle.

Comme exemple d'huile de ce genre, on peut citer l'isovoltine bio que l'on peut se procurer chez la société Total et qui est à base d'esters synthétiques à grande performance. La conductibilité thermique de l'isovoltine à 25°C est de 0,14 W/m.K. Sa rigidité diélectrique est supérieure à 70 kV. Cette huile convient tout particulièrement parce qu'elle est compatible avec les roulements et les joints de roulement du moteur, alors que, par exemple, une huile de silicone donnerait, avec la graisse de lubrification, un mélange non homogène, qui porterait atteinte au bon fonctionnement de la pompe. Convient également notamment l'huile MIDEL 7131 à base d'esters synthétiques. La conductibilité thermique de la MIDEL à 25°C est de 0,147 W/m.K. La rigidité diélectrique est supérieure à 30 kV. On peut aussi utiliser l'huile HAFA Dielecs.

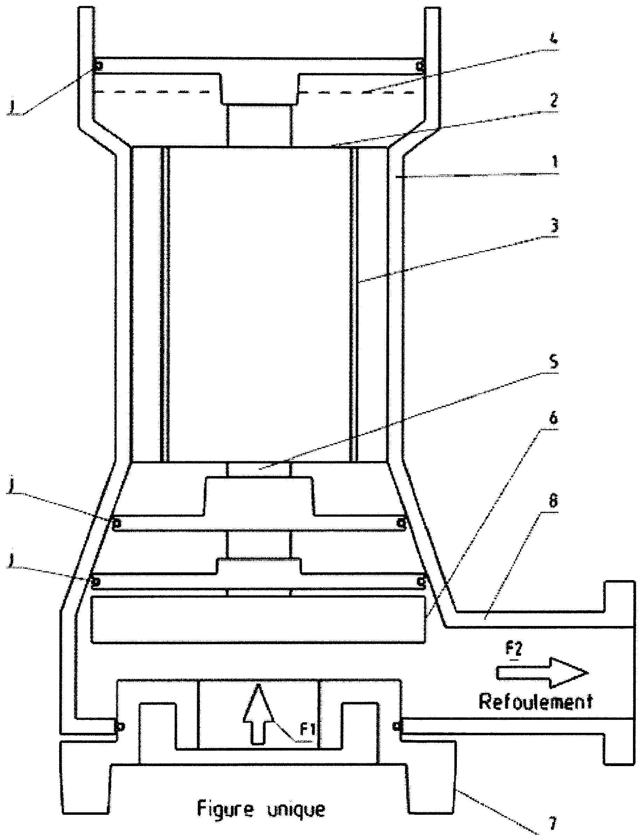

Au dessin annexé donné uniquement à titre d'exemple, la figure unique est une vue en coupe axiale d'un groupe motopompe suivant l'invention.

Le groupe motopompe comprend une carcasse 1 d'un moteur électrique ayant un stator 3 et un rotor 2. La carcasse 1 y compris l'espace compris entre le rotor 2 et le stator 3, est remplie d'huile jusqu'à un niveau 4 supérieur indiqué en tirets. L'arbre de sortie 5 du rotor tournant entraîne en rotation un impulseur 6, qui aspire du liquide à pomper par un couvercle 7 d'aspiration suivant la flèche F1 et le refoule par une tubulure 8 de refoulement suivant la flèche F2. On a indiqué par j divers joints.

On a rempli d'huile la carcasse du moteur d'un groupe motopompe Amarex NF 80-220/044 (que l'on peut se procurer chez la Demanderesse), ayant un moteur d'un diamètre de carcasse de 135 millimètres et un diamètre d'impulseur de 195 millimètres, le moteur ayant quatre pôles tournant à 1450 tours à la minute. En remplissant la carcasse d'huile HAFA Dielecs isolante électriquement et bonne conductrice de la chaleur en une quantité de 2,75 litres pour une pompe d'une capacité de 20 m³ à l'heure, le rendement électrique à la puissance nominale du moteur est passé de 68,4% à 69,8%.

## Revendications

1. Moteur électrique, ayant une carcasse (1) entourant de manière étanche à l'huile un stator (3) et un rotor (2) et contenant de l'huile isolante du point de vue électrique et bonne conductrice de la chaleur, **caractérisé en ce que** de l'huile est emprisonnée dans sensiblement tout l'espace laissé libre par le stator et le rotor dans la carcasse (1).

2. Moteur électrique suivant la revendication 1, **caractérisé en ce que** l'huile est biodégradable.

3. Moteur électrique suivant la revendication 1 ou 2, **caractérisé en ce que** l'huile est à base d'ester.

4. Moteur électrique suivant l'une des revendications précédentes, **caractérisée en ce que** la rigidité diélectrique de l'huile est supérieure ou égale à 27 kV.

5. Moteur électrique suivant l'une des revendications précédentes, **caractérisée en ce que** la conductibilité thermique de l'huile à 25° est supérieure ou égale à 0,12 w/m.K.

6. Procédé pour retarder l'échauffement d'un moteur électrique et pour en augmenter le rendement électrique, **caractérisé en ce que** l'on remplit d'huile l'espace laissé libre dans la carcasse par le rotor et le stator.

7. Procédé suivant la revendication 6, **caractérisé en ce que** l'on remplit de 60 à 100% du volume de l'espace laissé libre.

8. Procédé suivant la revendication 7, **caractérisé en ce que** l'on remplit de 90 à 99% du volume de l'espace laissé libre.

9. L'utilisation d'un moteur suivant l'une des revendications précédentes comme moteur d'un groupe motopompe comprenant un impulseur solidaire en rotation de l'arbre (5) de sortie du moteur électrique.
